# EUROPEAN PATENT SPECIFICATION

(11) **EP 0 416 891 B1**
(45) Date of publication and mention of the grant of the patent: **22.07.1998**
(21) Application number: 90309706.1
(22) Date of filing: 05.09.1990
(51) Int. Cl.: G06F 13/38, G06F 13/12, G06F 19/00

(54) **Apparatus for providing a universal interface to a process control system**
Vorrichtung zur Bereitstellung einer universellen Schnittstelle für ein Prozesssteuerungssystem
Appareil pour fournir une interface universelle à un système de contrôle d'un procédé

(30) Priority: 05.09.1989 US 402954
(43) Date of publication of application: 13.03.1991
(73) Proprietor: HONEYWELL INC., Minneapolis Minnesota 55408 (US)
(72) Inventor: Bansal, Ravinder M., Montgomery Co PA 19044 (US); Hahn, Amand J., Montgomery Co PA 19446 (US)
(74) Representative: Fox-Male, Nicholas Vincent Humbert

(56) References cited:
- EP-A- 0 147 046
- US-A- 4 253 148
- US-A- 4 296 464
- IEEE 1980 IECI PROCEEDINGS 1980, PHILADELPHIA,US pages 340 - 344 J.R.GLOVER JR. ET AL. 'A Design for the Remote Link Unit - a Multiprocessor Remote Terminal'

## Description

### RELATED APPLICATIONS

The present application is related to the following:
(a) US-A-4 959 768, entitled "APPARATUS FOR TRACKING PREDETERMINED DATA FOR UPDATING A SECONDARY DATA BASE," by P. Gerhart, filed on January 23, 1989;
(b) US-A-4 958 270, entitled "METHOD FOR CONTROL DATA BASE UPDATING OF A REDUNDANT PROCESSOR IN A PROCESS CONTROL SYSTEM," by P. McLaughlin et al, filed on January 23, 1989;
(c) US-A-4 937 575, entitled "A PRECISION A/D CONVERTER UTILIZING A MINIMUM OF INTERFACE INTERCONNECTIONS," by K. Kummer, filed on October 18, 1988;
(d) US-A-4 841 286, entitled "APPARATUS AND METHOD FOR DETECTION OF AN OPEN THERMOCOUPLE IN A PROCESS CONTROL NETWORK," by K. Kummer, filed on February 8, 1988;
(e) US-A-4 872 186, entitled "APPARATUS AND METHOD FOR IDENTIFICATION OF MESSAGE INITIATION IN A PROCESS CONTROL NETWORK," by P. Gerhart et al, filed on November 17, 1987;
(f) US-A-4 860 280, entitled "APPARATUS AND METHOD FOR A SECURE AND DIAGNOSABLE ANTI-JABBER COMMUNICATION CIRCUIT," by P. Gerhart, filed on November 17, 1987;
(g) U.S. Patent No. 4,607,256, issued on August 19, 1986, (reissue applied for, reissue Serial No. 07/186,230, filed on April 26, 1986); and
(h) U.S. Patent No. 4,296,464, issued on October 20, 1981;
all of above assigned to Honeywell Inc., the assignee of the present application.

### BACKGROUND OF THE INVENTION

This invention relates to an apparatus for interfacing a plurality of signals to a processor, and more particularly, to an interface apparatus for interfacing a selectable plurality of different types of signals to a process control system.

In present day process control systems, interface devices are utilized to couple predetermined types of signals to the process control system, the predetermined types of signals being high-level analog, low-level analog, digital,.... Because of a rigid structure of these present day interface devices, only predetermined types of signals are permitted to be coupled to these present day interface devices. Also, the rigid structure provides only a predetermined number of control loops and secondly, only a predetermined number of input/output (I/O) for the control loops. Because some control tasks are more control processing intensive than others, and some tasks are more I/O intensive than others, it is desirable to interface selective tasks to the process control system via the interface device which will insure effective and efficient completion of these tasks, ie. control processing and I/O. However, the configuration provided by the structure of these present day interface devices is essentially fixed, ie., restricting what the user can do to efficiently tailor the configuration to specific user requirements, thereby limiting the number and types of tasks which can be coupled to the interface device.

The interface apparatus of the present invention permits a flexible quantity of different types of I/O signals to be interfaced (to the process control system) via the interface apparatus due to the architecture of the interface apparatus which essentially separates the processing of control from the I/O of control, thereby permitting the user to configure the system to meet a defined control strategy, without the limitations imposed by previous systems. Further, the processing of control can be eliminated altogether in the interface apparatus of the present invention. In this case the processing of control is performed by a controller external to the interface apparatus, thus permitting the interface apparatus to function as a data acquisition unit, thereby adding to the configuration flexibility.

### SUMMARY OF THE INVENTION

The present invention provides a process control system having a plant control network for performing the overall supervision of a process being controlled, said plant control network having at least one external bus for operatively connecting a corresponding interface apparatus to said plant control network, each interface apparatus interfaces with at least one field device, each field device being a predetermined type, each interface apparatus characterised by:-
a) controller means operatively connected to the external bus, for providing an interface between said plant control network and the field devices operatively connected to said interface apparatus, such that a control function of the field devices is provided, and commands are accepted from the plant control network and responded to, and status and history of the control function are reported on a predetermined basis to the plant control network, permitting the plant control network to perform its overall supervisory function, said controller means including:
   i) first interface means, operatively connected to said external bus, for interfacing with the external bus to provide a communication link with the external bus in accordance with a first predetermined protocol;
   ii) communication means, operatively connected to said first interface means, for communicating with said plant control network via said first interface means;
   iii) control unit means, operatively connected to said communication means for performing control processing of the field devices connected to said interface apparatus based on data inputted from the input type field devices, the results of the control processing being outputted to predetermined ones of said output type field devices thereby achieving the control function of the process being controlled, the control unit means further accepting commands from said plant control network and responds thereto, and reports status and history data of the process being controlled;
   iv) second interface means, operatively connected to said communication means and to said control unit means, for interfacing with an internal bus to provide a communication link with the internal bus in accordance with a second predetermined protocol; and
   v) global memory means, operatively connected to said first and second interface means, to said communication means and to said control unit means, for storing information common to said control unit means and to said communication means, and further providing communications means; and
b) at least one input/output (I/O) module means, each I/O module means operatively connected to said controller means via the internal bus, and wherein each I/O module means interfaces with at least one field device, each I/O module means of being of a first predetermined type including analog input (A/I) type, analog output (A/O) type, digital input (D/I) type, or digital output (D/O) type, each field device having associated therewith a second predetermined type including A/I, A/O, D/I, or D/O types, and wherein each field device having the second predetermined type is operatively connected to one of said I/O module means having a first predetermined type, such that the first predetermined type of said I/O module means and the second predetermined type of said field device are corresponding for obtaining data from or outputting data to input type field devices or output type field devices, respectively, thereby permitting data to flow between the controller means and the field devices thereby permitting said controller means to perform its control function.

Preferably, each I/O module means comprises:
a) transceiver means, operatively connected to said internal bus, for interfacing with the internal bus to provide a communication link with the internal bus in accordance with the second predetermined protocol.
b) microcontroller means, operatively connected to said transceiver means, for providing control of information flowing through the I/O module means, including preprocessing the information flowing through the I/O module means such that the information is in a predetermined form; and
c) logic means, operatively connected to said microcontroller means, for interfacing with one of said predetermined types of field devices to provide data to the output field device from the microcontroller means or from the input field device to the microcontroller means in a predetermined format.

Preferably the preprocessing of the information flowing through the I/O module means includes selected ones of zero drift, linearization, hardware correction, compensation, calibration corrections, limits checking, scaling, units conversion, and normalizing. The results of the control processing may be stored the results of the control processing are stored in said global memory for subsequent output to predetermined ones of said output type field devices, subsequent output being performed under control of the communication means in response to a command from the control unit means thereby relieving the control unit means from an input/output management function.

### BRIEF DESCRIPTION OF THE DRAWINGS

Figure 1 shows a block diagram of a process control system in which an interface apparatus of the present invention may be utilized;
Figure 2 shows a block diagram of a process controller, the preferred embodiment of the interface apparatus of the present invention;
Figure 3 shows a block diagram of a controller of the process controller of the preferred embodiment of the present invention;
Figure 4 shows a block diagram of the I/O module of the preferred embodiment of the present invention; and
Figure 5 shows a block diagram of an alternative embodiment of a process control system incorporating the interface apparatus of the present invention.

### DETAILED DESCRIPTION

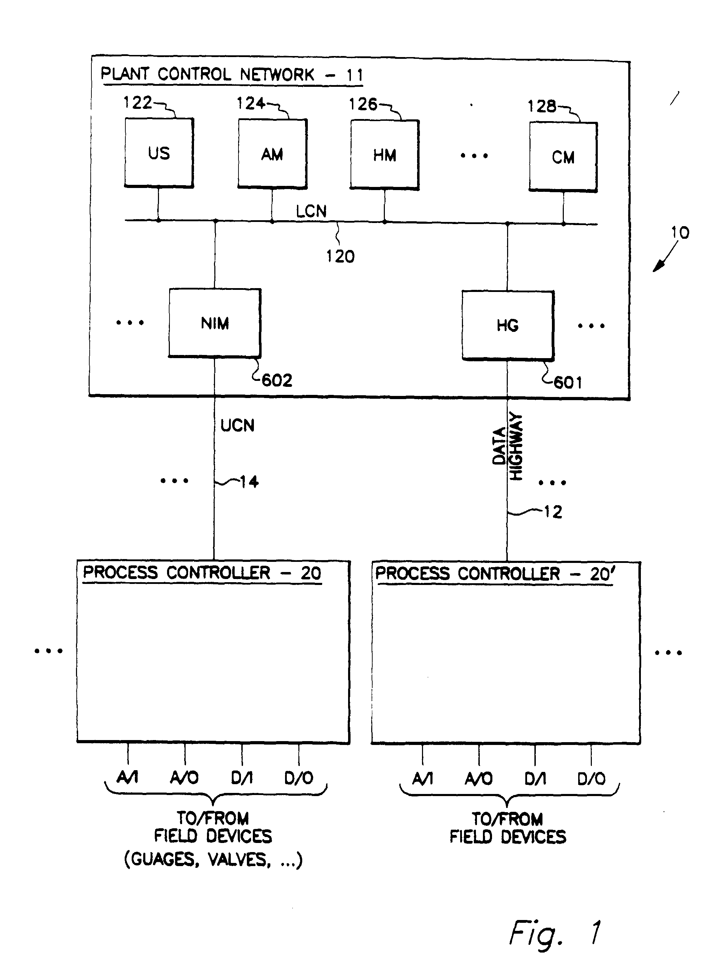

Before describing the interface apparatus of the present invention, it will be helpful in understanding a system environment in which the interface apparatus can be utilized. Referring to Figure 1, there is shown a block diagram of a process control system 10 in which the interface apparatus of the present invention can be found. The process control system 10 includes a plant control network 11, and connected thereto is a data highway 12, which permits a process controller 20' to be connected thereto. In the present day process control system 10, additional process controllers 20' can be operatively connected to the plant control network 11 via a corresponding highway gateway 601 and a corresponding data highway 12. A process controller 20, the interface apparatus of the present invention, is operatively connected to the plant control network 11 via a universal control network (UCN) 14 to a network interface module (NIM) 602. In the preferred embodiment of the process control system 10, additional process controllers 20 can be operatively connected to the plant control network 11 via a corresponding UCN 14 and a corresponding NIM 602. The process controllers 20, 20' interface the analog input and output signals, and digital input and output signals (A/I, A/O, D/I, and D/O, respectively) to the process control system 10 from the variety of field devices (not shown) which include valves, pressure switches, pressure gauges, thermocouples,....

The plant control network 11 provides the overall supervision of the controlled process, in conjunction with the plant operator, and obtains all the information needed to perform the supervisory function, and includes an interface with the operator. The plant control network 11 includes a plurality of physical modules, which include a universal operator station (US) 122, an application module (AM) 124, a history module (HM) 126, a computer module (CM) 128, and duplicates of these modules (and additional types of modules, not shown) as necessary to perform the required control/supervisory function of the process being controlled. Each of these physical modules is operatively connected to a local control network (LCN) 120 which permits each of these modules to communicate with each other as necessary. The NIM 602 and HG 601 provide an interface between the LCN 120 and the UCN 14, and the LCN 120 and the data highway 12, respectively. A more complete description of the plant control network 11, and the physical modules can be had by reference to U.S. Patent No. 4,607,256, referred to above as related application (h). A more complete description of the process controller 20' can be had by reference to U.S. Patent No. 4,296,464, referred to above as related application (i).

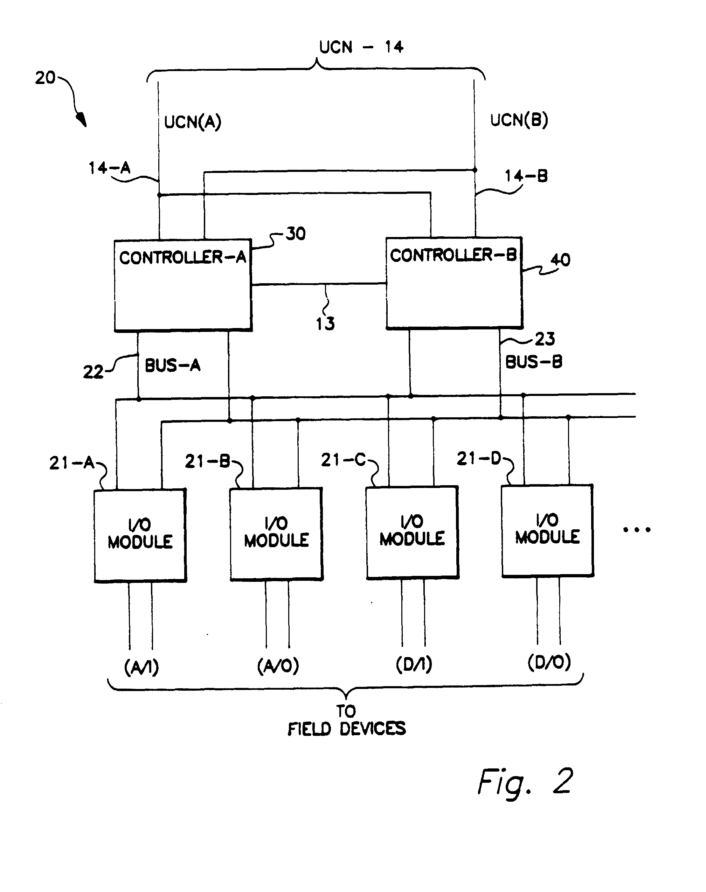

Referring to Figure 2 there is shown a block diagram of the process controller 20, ie., the interface apparatus of the present invention. The process controller 20 of the preferred embodiment of the present invention includes a controller A 30 and a controller B 40, which effectively operate as a primary and secondary controller. Controller A 30 and controller B 40 are connected to the UCN 14, the UCN 14 in the preferred embodiment of the present invention comprising for communication redundancy purposes, a UCN(A) 14A and a UCN(B) 14B. Input output (I/O) modules 21 interface to field devices, field devices being various valves, pressure switches, pressure gauges, thermocouples,...which can be analog inputs (A/I), analog outputs (A/O), digital inputs (D/I), and digital outputs (D/O). The controller A 30 interfaces to each I/O module 21 via a bus A 22, and controller B 40 interfaces to each I/O module 21 via a bus B 23. In addition, once again for communication redundancy purposes, controller A 30 is also connected to bus B and controller B 40 is connected to bus A 22.

Controller A and controller B, 30, 40, can communicate with each other via three mediums, the UCN 14, a link 13 between the controllers, and the buses A, B, 22, 23, bus A and bus B in the preferred embodiment of the present invention being serial I/O links. One controller (controller A 30 or controller B 40) operates as a primary controller and the other controller operates as a secondary controller (in more of a reserve mode than a back-up, in that if a failure of controller A 30 should occur, controller B is ready to take over the control function with essentially no start-up or initialization time). On a predetermined time basis, point processing is performed by the controller designated as the primary controller and communicates with the I/O modules 21. In addition, the controller acting as the primary controller communicates with the plant control network 11 reporting status, history, and accepting inputs from the plant control network such as commands from the operator via the universal station 122. In addition, a data base maintained by the primary controller is communicated to the secondary controller via link 13. Updating of the data base in the secondary controller is further described in the aforementioned related applications (a) and (b). In the preferred embodiment, as mentioned above one controller operates as a secondary controller; however, it will be understood by those skilled in the art that a secondary controller is not necessary for the process controller 20. In the preferred embodiment of the present invention, the secondary controller is optional and operates in a mode intended by the invention. It will further be understood by those skilled in the art that various configurations can exist for interfacing the controllers A, B 30, 40 to the UCN 14A, 14B. Controller A 30 can be interfaced to UCN 14A and controller B 40 can be interfaced to UCN 14B; however, in this case a bus (UCN) event that causes UCN A 14A to fail can cause a switch-over to the backup controller, ie., controller B 40. But in the preferred embodiment, controller A 30 is connected to both UCN 14A and 14B. Likewise, controller B 40 is connected to both 14A and 14B. In this configuration, a communication event does not force the system to a processor failover situation.

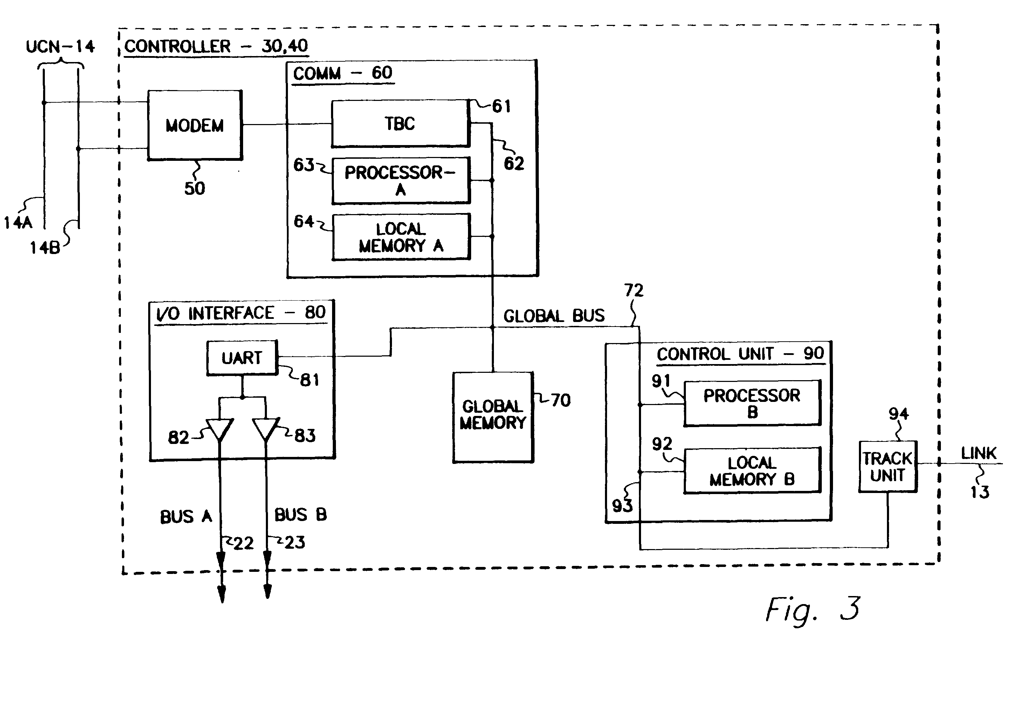

Referring to Figure 3, there is shown a block diagram of the controller 30, 40. A modem 50 is connected to the UCN 14, the modem having two inputs, one connected to UCN 14A and the other connected UCN 14B. In preferred embodiment of the present invention, the modem is a Concord Data Systems 5 mega-bit carrier band modem having two ports which allows interfacing with both UCN 14A and UCN 14B. The modem interfaces with a communication unit (COMM) 60 which in turn interfaces with a global memory 70, an I/O interface unit 80, and a control unit 90 via global bus 72. The communication unit 60 includes a communication control unit, in the preferred embodiment a token bus controller (TBC) 61, Motorola type 68824, which is connected to a local bus 62. Connected to the local bus 62 is a processor A 63 (which essentially performs the communication function) and a local memory A 64. The processor A 63 via the TBC 61, communicates with the plant control network 11 via modem 50. The local memory A 64 stores information, including personality image which is downloaded from the plant control network 11, for use by processor A 63 and TBC 61. The global memory 70 stores information which is common to both processors A63 and B 91. It also stores all the data received from bus A 22 and bus B 23. The global memory 70 also serves as an interprocessor communication vehicle between processors A 63 and B 91. Control unit 90 includes a processor B 91 and a local memory B 92. Processor B 91 performs the control function (ie., control processing) relating to the field devices. This essentially includes performing the point processing, and updating the local memory B 92 and global memory 70. Also coupled to the local bus 93 of control unit 90 is a track unit 94 which is utilized to implement the data base transfer via link 13 to the other controller 30, 40 of the process controller 20. A more detailed description of the track unit 94 can be had by making reference to the related patent applications identified above as related applications (a) and (b). The I/O interface unit 80 includes a receiver-transmitter device, in the preferred embodiment of the present invention this device being a UART (Universal Asynchronous Receiver/Transmitter) 81. In the preferred embodiment of the present invention the UART utilized is a circuit within the Intel 80C31 microcontroller. The UART 81 is coupled through drivers 82, 83 to bus A 22 and bus B 23, respectively. (As mentioned previously, control unit 90 can be eliminated, the control processing being performed by another processor within the plant control network 11, such as AM124. In this configuration, the interface apparatus of the present invention functions as a data acquisition unit).

Processor B 91 receives data from the various field devices through global memory 70, performs the necessary point processing and control function, and then updates the local memory B 92 and global memory 70, as required. The communication unit 60, in response to commands from the control unit 90 via global memory 70, inputs and outputs data between the I/O modules 21 (via the I/O interface unit 80) and the global memory 70, thereby relieving the control unit 90 from the burden of I/O module management. In this manner the control processing is performed by the control unit 90 within the process controller 20 for the predefined attached field devices, and the communication (ie., the I/O control) is handled by the communication unit 60 through the UART 81.

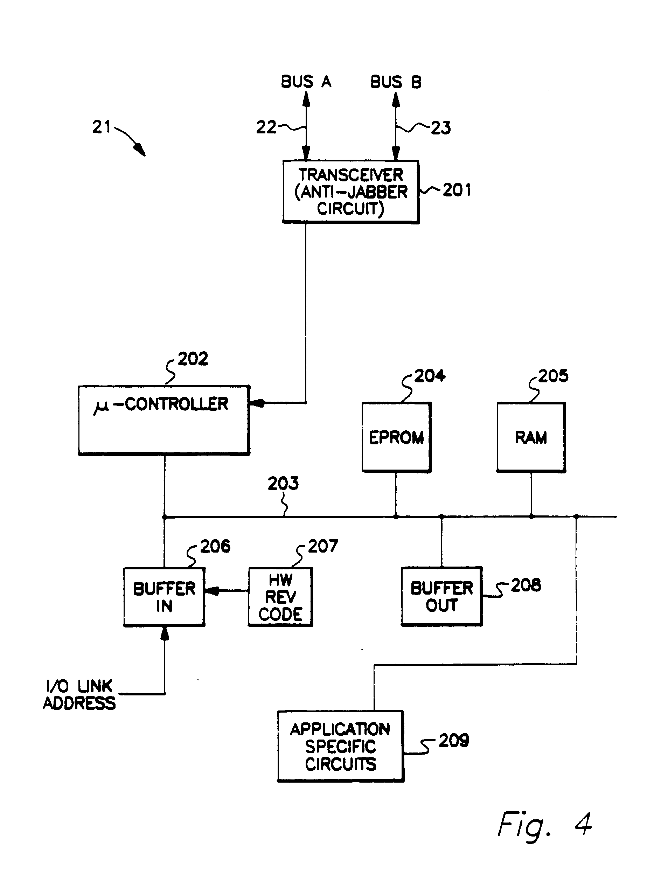

Referring to Figure 4 there is shown a block diagram of the I/O module of the preferred embodiment of the present invention. A transceiver (anti-jabber circuit) 201 interfaces with bus A 22 and bus B 23. The transceiver of the preferred embodiment of the present invention is of the type described in the aforementioned related application identified as related application (g) and (f). The transceiver 201 interfaces with a microcontroller (u-controller) 202. In the preferred embodiment of the present invention the microcontroller 202 is of the type, Intel 80C31. The microcontroller is coupled to a local bus 203, and includes an EPROM 204 and a RAM 205 also attached to the local bus 203. The RAM 205 contains the information which forms the database for the I/O module 21. The EPROM 204 contains the program information utilized by the microcontroller 202. (It will be recognized by those skilled the art that the EPROM and RAM comprise a memory unit and any type memory unit which can interface with the microcontroller 202 may be utilized.) Also attached to local bus 203 is an input buffer which receives the I/O link address information from the I/O link (bus A, bus B, 22, 23). Connected to the input buffer (BUFFER IN) 206 is a hardware revision code unit 207 which identifies the hardware and revision of the I/O module 21 which can be read by the microcontroller 202 in order to verify the revision of the hardware. The output buffer (BUFFER OUT) 208 is also connected to the local bus 203. The application specific circuits 209 is also connected to the local bus 203 and interfaces with the input and output buffers 206, 208, and the microcontroller 202 via the local bus 203. The application specific circuits vary from I/O module to I/O module depending on the field device to which the I/O module is to be coupled. If the field device is of a type which requires a digital input, then the application specific circuit 209 will include the logic in order to place the digital input into a predefined format which will interface with the remainder of the I/O module. Likewise, if the field device is such that requires an analog input, then the application specific circuit contains a logic which converts the analog input signal (via an A/D converter) into a format again consistent with predefined formats. In this manner, the I/O modules are referred to as a specific I/O module type. The microcontroller 202 performs the I/O processing (or preprocessing) for the application specific circuits 209. The preprocessing will vary from each I/O module 21 depending on the type (ie., A/I, A/O,...) the preprocessing essentially consisting of translating the signals from the application specific circuits to a format compatible with the controller 30, 40 (and more specifically with control unit 90), and putting the signals from controller 30, 40 in a format compatible with the I/O module 21. Some of the preprocessing performed includes zero drift, linearization (linearizing thermocouples), hardware correction, compensation (gain compensation and zero compensation), reference junction compensation, calibration correction, conversions, checking for alarms (limits)... and generating a signal in a predetermined format having predetermined scale (ie., engineering units, normalized units, percent of scale,...). In the preferred embodiment of the present invention seven types of applications specific circuits are provided for, these include a high level analog input, low level analog input, analog output, digital input, digital output, smart transmitter interface, and pulse input counter. For example, a detailed description of the low level analog input application specific circuit can be had by reference to the related application identified above as related application (c), and also to related applications (d) and (e).

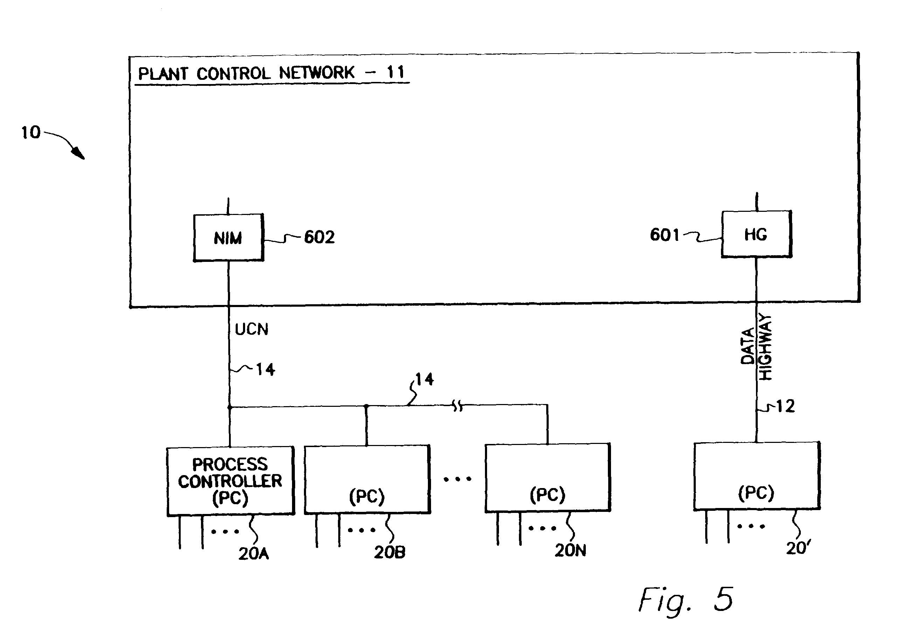

Referring to Figure 5, there is shown a block diagram of an alternative embodiment of a process control system incorporating the interface apparatus of the present invention. The network interface module (NIM) 602 is coupled to the universal control network (UCN) 14. Also coupled to the UCN 14 is a plurality of process controllers (PC) 20A, 20B, ... 20N, the interface apparatus of the present invention. The process controllers 20, 20B, ... 20N, can initiate communication to the plant control network 11, or can communicate with any other process controller coupled to UCN 14, unlike the previous process controllers 20'. These previous process controllers 20' were slaved to the highway gateway (HG) 601 and could only communicate in response to a message from HG 601. Thus, the process controllers 20A, 20B, ... 20N, of the present invention provide for "peer-to-peer" communication.

Referring back to Figure 2 it can be seen that the process controller 20 has a degree of flexibility not heretofore available. If the field devices for the particular process being controlled are all of an analog input type, the I/O modules 21A, 21B, 21C, 21D, can all be the same I/O module type; however, in the preferred embodiment of the present invention, the application specific circuit for the module 21 is changed to properly interface with the signal provided by the field device. In this manner, the process controller 20 is configurable to the field device configuration simply by inserting the correct module, ie., the I/O module type being compatible with the field device. Thus, it can be readily seen that the architecture of the interface apparatus of the present invention allows the user the flexibility of configuring the system to the process being controlled simply by inserting the required I/O modules into slots allocated to receive the I/O modules without any electrical, mechanical, or physical changes to the interface apparatus.

While there has been shown what is considered the preferred embodiment of the present invention, it will be manifest that many changes and modifications can be made therein without departing from the scope of the invention. It is intended, therefore, in the annexed claims to cover all such changes and modifications which fall within the true scope of the invention.

## Claims

1. A process control system having a plant control network (11) for performing the overall supervision of a process being controlled, said plant control network having at least one external bus (14) for operatively connecting a corresponding interface apparatus (20) to said plant control network, each interface apparatus interfaces with at least one field device, each field device being a predetermined type, each interface apparatus characterised by:-
a) controller means (20, 201) operatively connected to the external bus, for providing an interface between said plant control network and the field devices operatively connected to said interface apparatus, such that a control function of the field devices is provided, and commands are accepted from the plant control network and responded to, and status and history of the control function are reported on a predetermined basis to the plant control network, permitting the plant control network to perform its overall supervisory function, said controller means including:
i) first interface means (50), operatively connected to said external bus, for interfacing with the external bus to provide a communication link with the external bus in accordance with a first predetermined protocol;
ii) communication means (60), operatively connected to said first interface means, for communicating with said plant control network via said first interface means;
iii) control unit means (90), operatively connected to said communication means for performing control processing of the field devices connected to said interface apparatus based on data inputted from the input type field devices, the results of the control processing being outputted to predetermined ones of said output type field devices thereby achieving the control function of the process being controlled, the control unit means further accepting commands from said plant control network and responds thereto, and reports status and history data of the process being controlled;
iv) second interface means (80), operatively connected to said communication means and to said control unit means, for interfacing with an internal bus to provide a communication link with the internal bus in accordance with a second predetermined protocol; and
v) global memory means (70), operatively connected to said first and second interface means, to said communication means and to said control unit means, for storing information common to said control unit means and to said communication means, and further providing communications means; and
b) at least one input/output (I/O) module means, each I/O module means operatively connected to said controller means via the internal bus, and wherein each I/O module means interfaces with at least one field device, each I/O module means of being of a first predetermined type including analog input (A/I) type, analog output (A/O) type, digital input (D/I) type, or digital output (D/O) type, each field device having associated therewith a second predetermined type including A/I, A/O, D/I, or D/O types, and wherein each field device having the second predetermined type is operatively connected to one of said I/O module means having a first predetermined type, such that the first predetermined type of said I/O module means and the second predetermined type of said field device are corresponding for obtaining data from or outputting data to input type field devices or output type field devices, respectively, thereby permitting data to flow between the controller means and the field devices thereby permitting said controller means to perform its control function.

2. Apparatus according to Claim 1, characterised in that each I/O module means comprises:
a) transceiver means, operatively connected to said internal bus, for interfacing with the internal bus to provide a communication link with the internal bus in accordance with the second predetermined protocol.
b) microcontroller means, operatively connected to said transceiver means, for providing control of information flowing through the I/O module means, including preprocessing the information flowing through the I/O module means such that the information is in a predetermined form; and
c) logic means, operatively connected to said microcontroller means, for interfacing with one of said predetermined types of field devices to provide data to the output field device from the microcontroller means or from the input field device to the microcontroller means in a predetermined format.

3. Apparatus according to Claim 1 or 2 characterised in that the preprocessing of the information flowing through the I/O module means includes selected ones of zero drift, linearization, hardware correction, compensation, calibration corrections, limits checking, scaling, units conversion, and normalizing.

4. Apparatus according to any preceding Claim, characterised in that the results of the control processing are stored in said global memory for subsequent output to predetermined ones of said output type field devices, subsequent output being performed under control of the communication means in response to a command from the control unit means thereby relieving the control unit means from an input/output management function.

## Patentansprüche

1. Prozeßsteuersystem mit einem Anlagen-Steuernetzwerk (11) zur Ausführung der Gesamtüberwachung eines gesteuerten Prozesses, wobei das Anlagen-Steuernetzwerk wenigstens einen externen Bus (14) für die betriebsmäßige Verbindung einer entsprechenden Schnittstelleneinrichtung (20) mit dem Anlagen-Steuernetzwerk aufweist, jede Schnittstelleneinrichtung eine Schnittstelle mit wenigstens einem Feldgerät bildet, jedes Feldgerät von einem vorbestimmten Typ ist und jede Schnittstelleneinrichtung **gekennzeichnet ist durch:**
a) eine Steuereinrichtung (20, 20'), die betriebsmäßig mit dem externen Bus verbunden ist, um eine Schnittstelle zwischen dem Anlagen-Steuemetzwerk und den Feldgeräten vorzugeben, die betriebsmäßig an die Schnittstelleneinrichtung angeschlossen sind, so daß eine Steuerfunktion der Feldgeräte vorgegeben wird und Anweisungen von dem Anlagen-Steuernetzwerk angenommen und beantwortet werden und der Status und der Verlauf der Steuerfunktion auf einer vorbestimmten Basis an das Anlagen-Steuernetzwerk berichtet werden, was dem Anlagen-Steuemetzwerk die Ausführung seiner Gesamt-Überwachungsfunktion gestattet, wobei die Steuereinrichtung umfaßt:
i) eine erste Schnittstelleneinrichtung (50), die betriebsmäßig mit dem externen Bus verbunden ist, um eine Schnittstelleneinrichtung mit dem externen Bus und eine Dialogverbindung mit dem externen Bus gemäß einem ersten vorbestimmten Protokoll vorzugeben;
ii) eine Dialogeinrichtung (60), die betriebsmäßig mit der ersten Schnittstelleneinrichtung verbunden ist, um einen Dialog mit dem Anlagen-Steuernetzwerk über die erste Schnittstelleneinrichtung auszuführen;
iii) eine Steuereinheit (90), die betriebsmäßig mit der Dialogeinrichtung verbunden ist, um eine Steuerverarbeitung der an die Schnittstelleneinrichtung angeschlossenen Feldgeräte basierend auf Daten auszuführen, die durch Feldgeräte vorn Eingangstyp eingegeben werden, wobei die Ergebnisse der Steuerverarbeitung an vorbestimmte Feldgeräte vom Ausgangstyp ausgegeben werden, wodurch die Steuerfunktion des gesteuerten Prozesses erzielt wird und wobei die Steuereinheit Anweisungen von dem Anlagen-Steuernetzwerk annimmt und auf diese antwortet und Status- und Verlaufsdaten des gesteuerten Prozesses berichtet;
iv) eine zweite Schnittstelleneinrichtung (80), die betriebsmäßig mit der Dialogeinrichtung und der Steuereinheit verbunden ist, um eine Sclmittstelle mit einem internen Bus zu bilden und eine Dialogverbindung mit dem internen Bus gemäß einem zweiten vorbestimmten Protokoll vorzugeben; und
v) eine Global-Speichereinrichtung (70), die betriebsmäßig an die erste und zweite Schnittstelleneinrichtung, an die Dialogeinrichtung und an die Steuereinheit angeschlossen ist, um Infonnation zu speichern, die der Steuereinheit und der Dialogeinrichtung gemeinsam ist und um ferner ein Dialogmittel vorzugeben; und
b) wenigstens einen Ein/Ausgabe(I/O)-Modul, der betriebsmäßig an die Steuereinrichtung über den internen Bus angeschlossen ist, und wobei jeder I/O-Modul eine Schnittstelle mit wenigstens einem Feldgerät bildet, jeder I/O-Modul von einem ersten vorbestimmten Typ ist, der einen analogen Eingangstyp (A/I), einen analogen Ausgangstyp (A/O), einen digitalen Eingangstyp (D/I), oder einen digitalen Ausgangstyp (D/O) umfaßt und wobei jedem Feldgerät ein zweiter vorbestimmter Typ zugeordnet ist, der A/I-, A/O-, D/I- oder D/O-Typen umfaßt und wobei jedes Feldgerät vom zweiten vorbestimmten Typ betriebsmäßig an einen I/O-Modul vom ersten vorbestimmten Typ angeschlossen ist, so daß sich der erste vorbestimmte Typ des I/O-Moduls und der zweite vorbestimmte Typ des Feldgerätes einander entsprechen, um Daten von oder Daten zu einem Feldgerät vom Eingangs- oder Ausgangstyp zu erhalten oder auszugeben, wodurch Daten zwischen der Steuereinrichtung und den Feldgeräten fließen können und die Steuereinrichtung ihre Steuerfunktion ausführen kann.

2. Vorrichtung nach Anspruch 1, **dadurch gekennzeichnet,** daß jeder I/O-Modul umfaßt:
a) eine Sende/Empfangseinrichtung, die betriebsmäßig an den internen Bus angeschlossen ist, um eine Schnittstelle mit dem internen Bus zu bilden und eine Dialogverbindung mit dem internen Bus gemäß dem zweiten vorbestimmten Protokoll vorzugeben;
b) eine Mikrokontrollereinrichtung, die betriebsmäßig mit der Sende/Empfangseinrichtung verbunden ist, um eine Steuerung der durch den I/O-Modul fließenden Information vorzugeben, die eine Vorverarbeitung der durch den I/O-Modul fließenden Infonnation umfaßt, so daß sich die Information in einem vorbestimmten Format befindet; und
c) eine Logikeinrichtung, die betriebsmäßig mit der Mikrokontrollereinrichtung verbunden ist, um eine Schnittstelle mit einem vorbestimmten Typ von Feldgeräten zu bilden und Daten an das Ausgangs-Feldgerät von der Mikrokontrollereinrichtung vorzugeben oder Daten von dem Eingangs-Feldgerät an die Mikrokontrollereinrichtung in einem vorbestimmten Format vorzugeben.

3. Vorrichtung nach Anspruch 1 oder 2, **dadurch gekennzeichnet,** daß die Vorverarbeitung der durch den I/O-Modul fließenden Information ausgewählt ist aus einer Nullpunktsdrift, Linearisierung, Hardwarekorrektur, Kompensation, Kalibrierkorrekturen, Grenzwertüberprüfung, Skalierung, Maßeinheitswandlung und Normierung.

4. Vorrichtung nach irgendeinem vorhergehenden Anspruch, **dadurch gekennzeichnet,** daß die Ergebnisse der Steuerverarbeitung in dem Globalspeicher für die nachfolgende Ausgabe an vorbestimmte Feldgeräte vom Ausgabetyp gespeichert sind, wobei die nachfolgende Ausgabe unter Steuerung der Dialogeinrichtung aufgrund einer Anweisung von der Steuereinheit ausgeführt wird, wodurch die Steuereinheit von einer Eingabe/Ausgabe-Verwaltungsfunktion befreit wird.

## Revendications

1. Système de commande de processus ayant un réseau de commande d'installation (11) destiné à réaliser la supervision globale d'un processus qui est commandé. ledit réseau de commande d'installation ayant au moins un bus externe (14) destiné à relier de manière opérationnelle un appareil d'interface (20) correspondant au dit réseau de commande d'installation, chaque appareil d'interface assurant l'interface avec au moins un dispositif de terrain, chaque dispositif de terrain étant d'un type prédéterminé, chaque appareil d'interface étant caractérisé par :
a) des moyens de commande (20, 20¹) reliés de manière opérationnelle au bus externe, afin d'assurer une interface entre ledit réseau de commande d'installation et les dispositifs de terrain reliés de manière opérationnelle au dit appareil d'interface, de telle sorte qu'une fonction de commande des dispositifs de terrain est prévue, et des commandes sont acceptées en provenance du réseau de commande d'installation et des réponses sont fournies pour celles-ci, et l'état et l'historique de la fonction de commande sont rapportés sur une base prédéterminée au réseau de commande d'installation, en permettant au réseau de commande d'installation de réaliser sa fonction de supervision globale, lesdits moyens de commande comprenant :
i) des premiers moyens d'interface (50), reliés de manière opérationnelle audit bus externe, afin d'assurer l'interface avec le bus externe de façon à procurer une liaison de communication avec le bus externe suivant un premier protocole prédéterminé;
ii) des moyens de communication (60), reliés de manière opérationnelle aux dits premiers moyens d'interface, afin de communiquer avec ledit réseau de commande d'installation par l'intermédiaire desdits premiers moyens d'interface;
iii) des moyens d'unité de commande (90), reliés de manière opérationnelle aux dits moyens de communication afin de réaliser le traitement de commande des dispositifs de terrain reliés au dit appareil d'interface sur la base de données entrées par les dispositifs de terrain du type à entrée. les résultats du traitement de commande étant délivrés à ceux prédéterminés desdits dispositifs de terrain du type à sortie afin d'obtenir ainsi la fonction de commande du processus qui est commandé, les moyens d'unité de commande acceptant en outre des commandes provenant dudit réseau de commande d'installation et fournissant des réponses pour celles-ci, et rapportant des données d'état et d'historique du processus qui est commandé:
iv) des seconds moyens d'interface (80) reliés de manière opérationnelle aux dits moyens de communication et aux dits moyens de l'unité de commande. afin d'assurer l'interface avec un bus interne de façon à procurer une liaison de communication avec le bus interne suivant un deuxième protocole prédéterminé; et
v) des moyens de mémoire globale (70), reliés de manière opérationnelle aux dits premiers et deuxièmes moyens d'interface, aux dits moyens de communication et aux dits moyens d'unité de commande. afin de stocker une information commune aux dits moyens d'unité de commande et aux dits moyens de communication, et procurant en outre des moyens de communication: et
b) au moins un moyen de module d'entrée/sortie (I/O), chaque moyen de module I/O étant relié de manière opérationnelle aux dits moyens de commande par l'intermédiaire du bus interne, et dans lequel chaque moyen de module I/O assure l'interface avec au moins un dispositif de terrain, chaque moyen de module I/O étant d'un premier type prédéterminé comprenant un type à entrée analogique (A/I), un type à sortie analogique (A/O), un type à entrée numérique (D/I), ou un type à sortie numérique (D/O), chaque dispositif de terrain ayant un deuxième type prédéterminé associé comprenant des types A/I, A/O, D/I ou D/O, et dans lequel chaque dispositif de terrain ayant le deuxième type prédéterminé est relié de manière opérationnelle à l'un desdits moyens de module I/O ayant un premier type prédéterminé, de telle sorte que le premier type prédéterminé desdits moyens de module I/O et le deuxième type prédéterminé dudit dispositif de terrain correspondent afin d'obtenir des données provenant de dispositifs de terrain du type à entrée ou de dispositifs de terrain du type à sortie ou de délivrer des données à ceux-ci, respectivement. afin de permettre ainsi aux données de circuler entre les moyens de commande et les dispositifs de terrain, permettant ainsi aux dits moyens de commande de réaliser leur fonction de commande.

2. Appareil selon la revendication 1. caractérisé en ce que chaque moyen de module I/O comprend :
a) des moyens d'émetteur-récepteur, reliés de manière opérationnelle audit bus interne, afin d'assurer l'interface avec le bus interne de façon à procurer une liaison de communication avec le bus interne suivant le deuxième protocole prédéterminé,
b) des moyens de microcontrôleur, reliés de manière opérationnelle aux dits moyens d'émetteur-récepteur, afin de procurer une commande d'information circulant à travers les moyens de module I/O, comprenant le prétraitement de l'information circulant à travers les moyens de module I/O de telle sorte que l'information est sous une forme prédéterminée; et
c) des moyens logiques, reliés de manière opérationnelle aux dits moyens de microcontrôleur, afin d'assurer l'interface avec l'un desdits types prédéterminés de dispositifs de terrain de façon à délivrer des données au dispositif de terrain de sortie en provenance des moyens de microcontrôleur ou du dispositif de terrain d'entrée vers les moyens de microcontrôleur dans un format prédéterminé.

3. Appareil selon la revendication 1 ou 2, caractérisé en ce que le prétraitement de l'information circulant à travers les moyens de module I/O comprend ceux sélectionnés des traitements suivants: dérive de zéro. linéarisation, correction matérielle, compensation, corrections d'étalonnage, contrôle de limites, mise à l'échelle, conversion d'unités, et normalisation.

4. Appareil selon l'une quelconque des revendications précédentes, caractérise en ce que les résultats du traitement de commande sont stockés dans ladite mémoire globale pour une sortie ultérieure vers ceux prédéterminés desdits dispositifs de terrain du type à sortie, la sortie ultérieure étant réalisée sous la commande des moyens de communication en réponse à une commande provenant des moyens d'unité de commande, afin de libérer ainsi les moyens d'unité de commande d'une fonction de gestion d'entrée/sortie.
